# Europäisches Patentamt

## European Patent Office

## Office européen des brevets

(11) Veröffentlichungsnummer: **0 349 542**
**B1**

(12) **EUROPÄISCHE PATENTSCHRIFT**

(45) Veröffentlichungstag der Patentschrift: **30.01.91**

(51) Int. Cl.⁵: **B 65 D 81/08**, B 65 D 30/24

(21) Anmeldenummer: **88901563.2**

(22) Anmeldetag: **18.02.88**

(86) Internationale Anmeldenummer:
**PCT/DE88/00083**

(87) Internationale Veröffentlichungsnummer:
**WO 88/06131 25.08.88 Gazette 88/19**

(54) **AUFBLASBARER FOLIENBEUTEL.**

(30) Priorität: **18.02.87 DE 3705167**
**15.01.88 DE 3801041**

(73) Patentinhaber: **BECKER, Rolf**
**Schloss Stetten**
**D-7118 Künzelsau (DE)**

(43) Veröffentlichungstag der Anmeldung:
**10.01.90 Patentblatt 90/02**

(72) Erfinder: **BECKER, Rolf**
**Schloss Stetten**
**D-7118 Künzelsau (DE)**

(45) Bekanntmachung des Hinweises auf die
Patenterteilung:
**30.01.91 Patentblatt 91/05**

(74) Vertreter: **Haft, Berngruber, Czybulka**
**Postfach 14 02 46 Hans-Sachs-Strasse 5**
**D-8000 München 5 (DE)**

(84) Benannte Vertragsstaaten:
**DE FR GB NL SE**

(56) Entgegenhaltungen:
**EP-A-0 129 072**
**DE-B-1 141 941**
**FR-A-1 389 648**
**FR-A-2 067 530**
**FR-A-2 291 114**
**FR-A-24 253 87**
**US-A-4 192 699**
**US-A-4 465 188**

Courier Press, Leamington Spa, England.

# Beschreibung

Die Erfindung bezieht sich auf einen aufblasbaren Folienbeutel mit mehreren Kammern gemäß dem Oberbegriff des Patentanspruches 1.

Aus der US-PS 4 465 188 ist ein solcher Folienbeutel mit zwei Kammern bekannt, der aus zwei aufeinander gelegten Folien hergestellt ist, die an ihren Rändern verschweißt sind. Die Kammern sind hierbei durch eine mäanderförmig geführte, die obere und untere Folie des Folienbeutels miteinander verbindende Schweißnaht getrennt. Vom Rand des Folienbeutels ist in dessen Innenraum ein kurzer Folienschlauch geführt, dessen im Innenraum liegendes Ende durch die die beiden Kammern trennende Schweißnaht gegabelt ist. Die Wand des Folienschlauches ist an der Durchtrittsstelle in den Innenraum mit der oberen und unteren Folie verschweißt, so daß die beiden Kammern dort nach außen abgedichtet sind. Der Folienbeutel kann z.B. durch Luft aufgeblasen werden, die durch den Folienschlauch in den Innenraum eintritt und an dem gegabelten Ende des Folienschlauches in beide Kammern des Folienbeutels strömt. Wenn nach Aufblasen des Folienbeutels die Luftzufuhr durch den Folienschlauch abgestellt wird, so wird das in den Innenraum des Folienbeutels hineinragende Ende des Folienschlauches durch den Innendruck im Folienbeutel zusammengepreßt, so daß keine Luft mehr nach außen entweichen kann. Ein separates Ventil zum Verschließen des Folienbeutels ist hiermit nicht notwendig.

Dieser bekannte Folienbeutel ist gut dazu geeignet, Schutztaschen für zerbrechliche Gegenstände herzustellen, die dann durch die auf beiden Seiten liegenden Luftpolster geschützt werden. Schwierigkeiten bei der Herstellung ergeben sich jedoch bei Folienbeuteln mit mehr als zwei Klammern, da mit Hilfe des Folienschlauches maximal zwei Kammern ohne Schwierigkeiten aufzublasen sind.

Der bekannte Folienbeutel kann auch nicht als Füllmaterial beim Verpacken einer Ware, z.B. anstelle von Styroporflocken verwendet werden. Außerdem ist es nicht möglich, Waren unterschiedlicher Form innerhalb der Verpackung sicher zu fixieren.

Der Erfindung liegt die Aufgabe zugrunde, einen Folienbeutel der in Rede stehenden Art anzugeben, der einfach hergestellt und unabhängig von der Anordnung der Kammern einfach aufgeblasen werden kann und zudem als Füllmaterial und zum Fixieren einer Ware in einer Verpackung verwendbar ist.

Diese Aufgabe ist gemäß der Erfindung durch die im kennzeichnenden Teil des Patentanspruchs 1 angegebenen Merkmale gelöst.

Demgemäß wird der Folienschlauch durch alle Kammern des Folienbeutels in einem Zug geführt. An den Durchtrittsstellen am Rand des Folienbeutels und an den die einzelnen Kammern voneinander trennenden Nähten wird der Folienschlauch für das zum Aufblasen verwendete Medium durchgängig gehalten, ohne daß dabei die Abdichtung zwischen den Folien des Folienbeutels nach außen und zwischen den Kammern untereinander aufgehoben wird. Die Wand des Folienschlauches ist ihrerseits für das zum Aufblasen verwendete Medium durchgängig, indem z.B. die Wand in regelmäßigen Abständen mit Perforationen versehen ist.

Der Folienschlauch kann z.B. aus zwei Streifen eines thermoplastisch verschweißbaren Materials hergestellt sein. Gegebenenfalls kann als Zwischenlage noch ein Streifen aus wärmeabweisendem Material vorgesehen werden, durch den sichergestellt wird, daß beim Verschweißen des Folienschlauches mit den Folien des Folienbeutels der Schlauch an den Durchtrittsstellen am Rand und im Bereich der die Kammern trennenden Nähte durchgängig bleibt.

Bei der Herstellung von Folienbeuteln gemäß der Erfindung ist es möglich, eine Vielzahl solcher Beutel in einem Zuge herzustellen, wie dieses auch von herkömmlichen Folienbeuteln bekannt ist. Der schmale Folienschlauch läuft bei der Herstellung von Beutel zu Beutel mit. Zwischen den einzelnen Folienbeuteln verlaufen Trennähte, die auch den Folienschlauch teilweise durchtrennen. Die derart in einem Zug hergestellten Folienbeutel werden auf einer Rolle aufgewickelt. Dies ermöglicht eine wirtschaftliche Serienproduktion.

Soll ein Folienbeutel für Verpackungszwecke verwendet werden, so wird dieser Beutel von der Rolle abgezogen, an der Trennaht von der Rolle getrennt und über den Folienschlauch aufgeblasen, wobei sich alle Kammern des Folienbeutels füllen. Wird die Luftzufuhr durch den schmalen Folienschlauch abgebrochen, so läuft die in diesem noch befindliche Restluft nach außen zurück. Durch den Innendruck im Folienbeutel wird der Folienschlauch zusammengedrückt. Durch diese Selbstschließung kann jetzt aus dem Inneren des Folienbeutels keine Luft mehr nach außen entweichen. Beim Aufblasen kann noch mit der Luft eine geringe Menge klebriger Flüssigkeit in den Folienschlauch eingesprüht werden, wobei beim anschließenden Selbstverschließen des Folienschlauches der Schließeffekt noch verbessert wird. Den gleichen Effekt erzielt man durch Einfetten oder Einölen des Folienschlauches.

Ein Folienbeutel gemäß der Erfindung ist ausgezeichnet dazu geeignet. z.B. in Kartons verpackte Ware in ihrer Lage zu halten und gleichzeitig vor Stößen zu schützen. Durch die Ausbildung als Mehrkammerbeutel kann dieser auch um Ecken oder Kanten eines zu verpackeden Gutes herumgelegt werden. Der Folienbeutel kann durch unterschiedlich hartes Aufblasen den auszufüllenden Freiräumen zwischen Ware und Karton gut angepaßt werden. Die Ware wird weich festgesetzt und gibt dem Karton die zum Verschließen oder Verkleben nötige Innenspannung.

Ein Folienbeutel gemäß der Erfindung kann auch für andere Zwecke verwendet werden, z.B. für die Herstellung von Schwimmwesten, Schlauchbooten, aufblasbaren Zelten usw.. Als Material hierfür kann Gummi, gummierte Leinwand oder dergleichen verwendet werden.

Selbstverständlich ist es gegebenenfalls möglich, den Folienbeutel anstatt mit Luft auch mit einem anderen Gas oder mit einer Flüssigkeit zu füllen.

Weitere Ausgestaltungen der Erfindung gehen aus den Unteransprüchen hervor. Die Erfindung ist in Ausführungsbeispielen anhand der Zeichnung näher erläutert. In dieser stellen dar.

Fig. 1 eine Aufsicht auf einen Folienbeutel gemäß der Erfindung, der mit Hilfe eines Folienschlauches aufgeblasen wird;

Fig. 2. eine Aufsicht auf mehrere aneinanderhängende Folienbeutel;

Fig. 3 eine Aufsicht auf einen weiteren Folienbeutel;

Fig. 4 und 5 jeweils einen schematischen Querschnitt in Explosionsdarstellung durch einen Folienbeutel im Bereich des Folienschlauches in zwei unterschiedlichen Ausführungsformen;

Fig. 6 bis 8 jeweils perspektivische Darstellungen eines Teiles eines Folienschlauches in unterschiedlichen Ausführungsformen;

Fig. 9 einen Querschnitt durch eine weitere Ausführungsform eines Folienschlauches;

Fig. 10 die Verbindung eines Folienschlauches mit einem Folienbeutel;

Fig. 11 eine schematische Aufsicht auf zwei Schweißnähte eines Folienbeutels, die einen Folienschlauch überdecken.

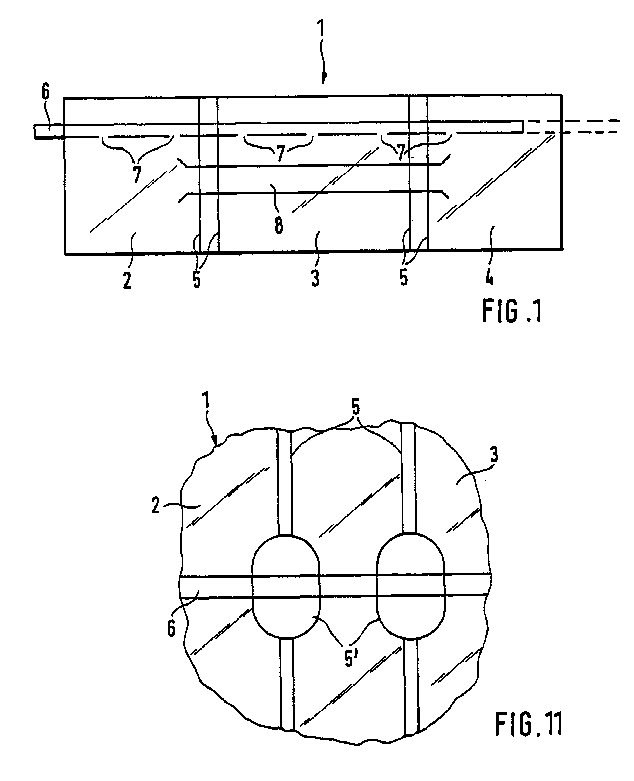

In Fig. 1 ist ein Folienbeutel 1 dargestellt, der aus drei Kammern 2, 3 und 4 zusammengesetzt ist, die jeweils durch eine doppelte Trennaht 5 voneinander getrennt sind. Ein Folienschlauch 6 wird durch den Rand des Folienbeutels von außen in dessen Innenraum geführt und durchläuft sämtliche Kammern 2, 3 und 4. Der Folienschlauch endet entweder in der letzten Kammer des Folienbeutels oder kann an der anderen Seite des Folienbeutels, wie gestrichelt angedeutet, wieder aus diesem herausgeführt sein. An den Durchtrittsstellen des Folienschlauches in den Folienbeutel und an den doppelten Trennähten 5 wird der Folienschlauch zwar mit den Folien des Folienbeutels dicht verschweißt, bleibt jedoch für das zum Aufblasen verwendete Medium, üblicherweise Luft, durchlässig. Der Folienschlauch 6 weist Austrittsöffnungen 7 auf, durch die Luft aus dem Folienschlauch 6 in die einzelnen Kammern 2, 3 und 4 des Folienbeutels 1 austreten kann. Wird der Folienbeutel aufgeblasen, so bilden sich die drei Kammern 2, 3 und 4 kissenförmig aus. Der Folienbeutel kann auch mit einer speziellen Form versehen werden, indem in einem oder mehreren Kissen die obere und untere Folie miteinander verschweißt werden. Die Form der Verschweißung hängt von dem jeweiligen Anwendungsfall ab. Bei dem in Fig. 1 dargestellten Folienbeutel soll dieser dazu dienen, einen Topf in seiner Lage zu fixieren und dabei gleichzeitig den Topfhenkel zu schützen. Aus diesem Grunde ist der Folienbeutel mit zwei parallelen Schweißnähten 8 versehen, mit denen die obere und untere Folie des mittleren Kissens 3 und ein Teil der beiden äußeren Kissen 2 und 4 miteinander verbunden wird. Wird der Folienbeutel aufgeblasen, so kann der Henkel des Topfes in den durch die beiden Schweißnähte 8 begrenzten Schlitz eingeschoben werden, während der Topf selbst durch die benachbarten Kissen in der Lage fixiert wird.

Eine andere Möglichkeit, die Form des aufgeblasenen Folienbeutels zu beeinflussen und an den jeweiligen Anwendungsfall anzupassen, besteht darin, die Folien des Folienbeutels durch einen Tiefziehvorgang vorzuformen.

Wenn der Folienbeutel 1 aufgeblasen ist, wird der Folienschlauch 6 durch den Innendruck im Folienbeutel automatisch verschlossen. Es ist günstig, die Folien des Folienbeutels und den Folienschlauch zwischen den doppelten Trennähten 5 mit einer Entlüftungsöffnung 9 zu versehen, was im einfachsten Falle dadurch geschehen kann, daß dort der Folienbeutel durchstochen wird. Hierdurch wird der Folienschlauch zusätzlich entlüftet.

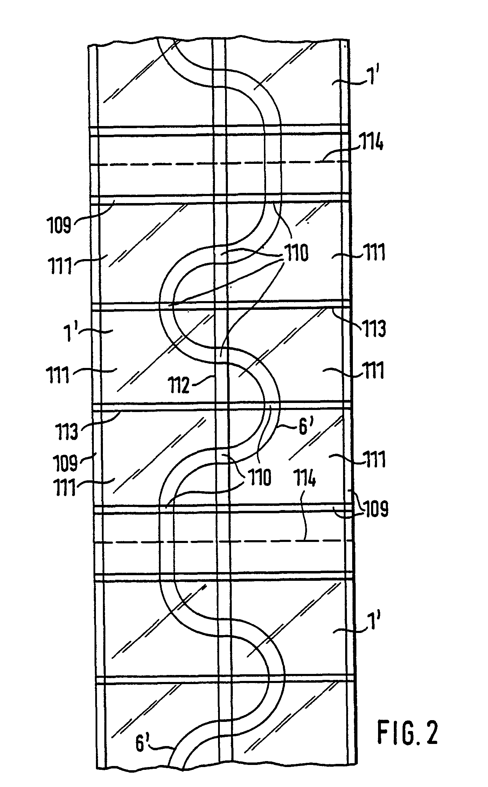

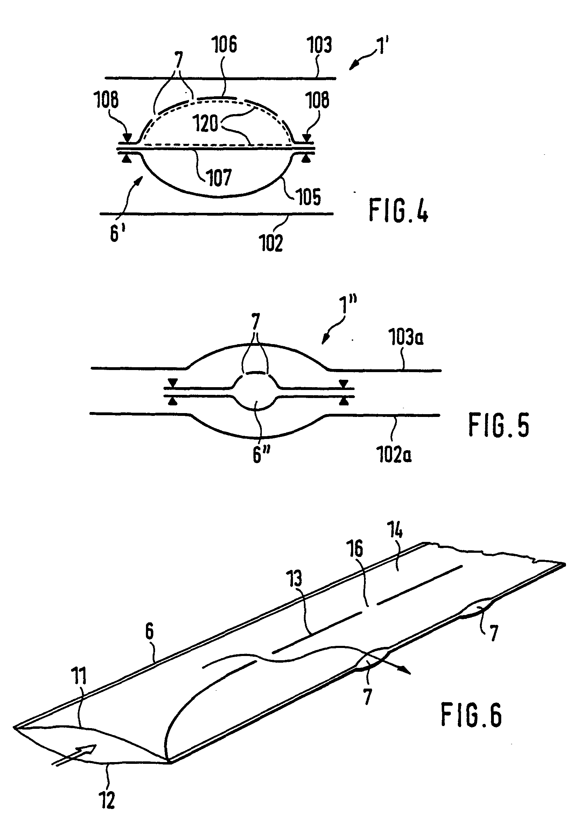

In Fig. 2 ist ein Folienschlauch 1' mit sechs Kammern 111 dargestellt, der entsprechend Fig. 4 aus einer Unterfolie 102, einer Oberfolie 103 und einem Folienschlauch 6' zusammengesetzt ist. Die Unter- und Oberfolie sind an ihren Rändern mit Schweißnähten 109 verbunden, die Kammern 111 sind durch eine in Längsrichtung des Folienbeutels verlaufende Schweißnaht 112 und zwei in Querrichtung verlaufende Schweißnähte 113 voneinander getrennt. Der Folienschlauch 6' ist aus einem unteren Folienstreifen 105, einem oberen Folienstreifen 106 und einem mittleren Folienstreifen 107 aufgebaut. An den beiden Längsrändern werden die drei Folienstreifen thermoplastisch miteinander verschweißt, was durch 108 angegeben ist. Der obere Folienstreifen 106 weist zudem noch Perforationen 7 auf.

Der Folienschlauch 6' ist mäanderförmig in einem Zug durch alle Kammern 111 des Folienbeutels 1 geführt; die Durchtrittsstellen durch die Schweißnähte 109, 112 und 113 sind mit 110 bezeichnet. Beim Verschweißen des Folienbeutels werden die Ober- und Unterfolien 102 und 103 auch mit den Folienstreifen 105 und 106 des Folienschlauches 6' im Bereich der Durchtrittsstellen 110 thermoplastisch verschweißt, ohne daß dabei die beiden Folienstreifen 105 und 106 des Folienschlauches miteinander verschweißt werden. Hierzu kann der oben erwähnte mittlere Folienstreifen 107 des Folienschlauches 6' dienen. Somit verbleibt der Folienschlauch 6' an den Durchtrittsstellen durch die Schweißnähte durchgängig, wobei gleichzeitig der Innenraum des Folienbeutels nach außen und die Kammern gegeneinander abgedichtet sind.

Statt bei dem Folienschlauch 6' einen mittleren Folienstreifen 107 zur Hitzeabweisung beim Schweißvorgang zu verwenden, ist es auch möglich, die Innenseite der Folienstreifen 105 und 106 entsprechend auszugestalten.

In Fig. 2 ist noch angedeutet, daß mehrere Folienbeutel aneinandergereiht werden können; zwischen den einzelnen Folienbeuteln sind Trennähte 114 vorgesehen, so daß jeweils ein Folienbeutel bei Bedarf abgetrennt werden kann.

Zum Aufblasen des Folienbeutels wird Luft oder ein anderes Medium von außen in den Folienschlauch in den Folienbeutel eingeblasen, so daß alle Kammern 111 gefüllt werden, bis der Folienbeutel das gewünschte Volumen aufweist. Nach Ende der Luftzufuhr wird der Folienschlauch durch den Innendruck in den Kammern zusammengepreßt, so daß die Folienstreifen 105, 106 und 107 direkt aneinander anliegen. Dadurch wird der Folienschlauch auch an den Durchtrittsstellen 110 verschlossen, so daß keine Luft mehr nach außen entweichen kann. Die Innenwände des Folienschlauches können mit einer klebrigen, fettigen oder öligen Schicht 120 bedeckt sein.

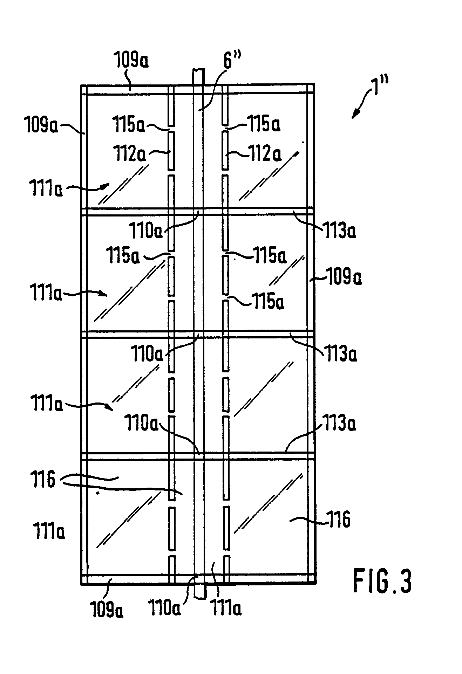

Der Folienbeutel 1'' gemäß den Fig. 3 und 5 ist aus einer Unterfolie 102a, einer Deckfolie 103a und einem Folienschlauch 6'' zusammengesetzt. Die Folien werden an den Rändern mit Schweißnähten 109a verschlossen; außerdem ist der Folienbeutel durch drei Querschweißnähte 113a in drei Kammern 111a unterteilt, wobei die Kammern durch zwei Längsschweißnähte 112a jeweils in drei Teilkammern 116 unterteilt sind, die jeweils miteinander kommunizieren. Hierzu sind in den Längsschweißnähten 112a Durchbrüche 115a vorgesehen. Durch die mittleren Teilkammern läuft der Folienschlauch 6''. An den Durchtrittsstellen 110a im Bereich der Schweißnähte 109a und 113a ist der Folienschlauch 6'' wie oben beschrieben mit den Folien 102a und 103a verschweißt, bleibt dort jedoch für das zum Aufblasen verwendete Medium durchgängig. In Längsrichtung weist der diesmal nur aus einer Ober- und einer Unterfolie bestehende Folienschlauch Perforationen 7 auf. Der Folienbeutel wird wie oben zum ersten Ausführungsbeispiel beschrieben, aufgeblasen und verschließt sich nach Ende des Aufblasvorganges von selbst. Der in Fig. 3 gezeigte Folienbeutel ist sehr beweglich, so daß etwaige Freiräume in einer Verpackung gut ausgefüllt werden.

Weitere Ausführungsbeispiele für Folienschläuche mit besonders geringem Rückfluß nach Ende des Aufblasvorganges sind in den Fig. 6 und folgende dargestellt.

Der Folienschlauch 6 ist gemäß Fig. 6 aus einer oberen Folie 11 und einer unteren Folie 12 zusammengesetzt, die an den Rändern miteinander verschweißt sind. Die beiden Folien sind außerdem durch eine etwa mittige Trennaht 13 miteinander verbunden, so daß sich zwei Schlauchkammern, nämlich eine Haupt- und eine Nebenkammer 14 und 15 ergeben, die sich über die gesamte Länge des Folienschlauches erstrecken. Die Trennaht 13 weist in Längsrichtung Durchbrechungen auf, die Verbindungsöffnungen 16 zwischen den beiden Schlauchkammern 14 und 15 bilden. Außerdem ist die eine Randnaht des Folienschlauches 6 mit Austrittsöffnungen 7 versehen. Die Trennaht 13 kann noch am Aufblasende des Folienschlauches 6 zu der Randnaht des Folienschlauches geführt werden. Wird der beschriebene Folienschlauch in einen Folienbeutel gemäß Fig. 1 montiert, so wird zum Aufblasen Luft in Pfeilrichtung in den Folienbeutel geblasen. Diese Luft nimmt dann durch die Verbindungsöffnungen 7 einen mäanderförmigen Weg, wie durch den Pfeil angedeutet. Wird der Aufblasvorgang beendet, dann strömt durch den Strömungswiderstand zwischen Austrittsöffnungen 7 und Verbindungsöffnungen 16 nur ein vernachlässigbarer Anteil von Luft aus dem Folienbeutel in den Folienschlauch zurück. Die Nebenkammer 15 mit den Austrittsöffnungen 7 wird verschlossen, und zwar bereits dann, wenn aus der Hauptkammer 14 das darin noch befindliche Aufblasmedium nach außen abströmt.

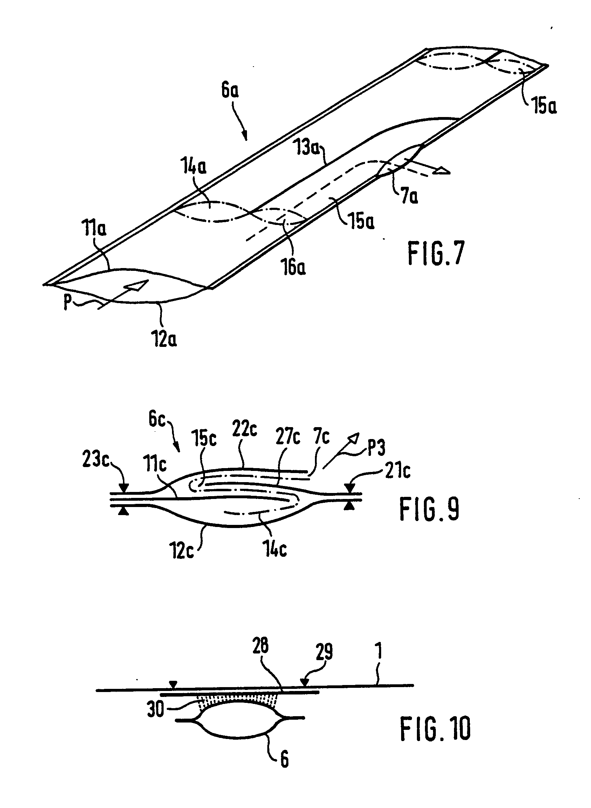

In Fig. 7 ist eine Variante eines Folienschlauches 6a gezeigt. Dieser Folienschlauch ist wiederum aus einer oberen und unteren Folie 11a und 12a zusammengesetzt. In Längsrichtung sind ebenfalls Austrittsöffnungen 7a vorgesehen, die am Rand des Folienschlauches angeordnet sind. Der Folienschlauch ist durch eine Trennaht 13a im Bereich der Austrittsöffnungen 7a in eine Hauptkammer 14a und eine Nebenkammer 15a unterteilt, so daß über die Länge des Folienschlauches mehrere Nebenkammern vorhanden sind. Die Naht 13a verbindet die obere und untere Folie des Folienschlauches im Bereich der Austrittsöffnung 7a und ist in Aufblasrichtung entsprechend dem Pfeil P hinter der Austrittsöffnung 7a zum Rand des Folienschlauches 6a geführt, so daß dort die Nebenkammer 15a abgeschlossen ist. Die Verbindungsöffnung 16a zwischen Haupt- und Nebenkammer liegt am offenen Ende der Naht 13a. Wie in Fig. 7 angedeutet, können auch innerhalb der Nebenkammer 15a mehrere Austrittsöffnungen 7a vorgesehen sein. Eine weitere Austrittsöffnung ist dort gestrichelt dargestellt.

Am Ende des Aufblasvorganges werden zunächst die Ober- und Unterfolie in den Nebenkammern zusammengepreßt, so daß der Folienschlauch verschlossen wird. Durch Zusammenpressen auch der Hauptkammer wird die darin befindliche Restluft nach außen gedrückt. Der Anteil der längs des gestrichelten Pfeiles aus dem Folienbeutel zurückfließenden Luft ist durch den Strömungswiderstand innerhalb der Nebenkammern 15a praktisch vernachlässigbar.

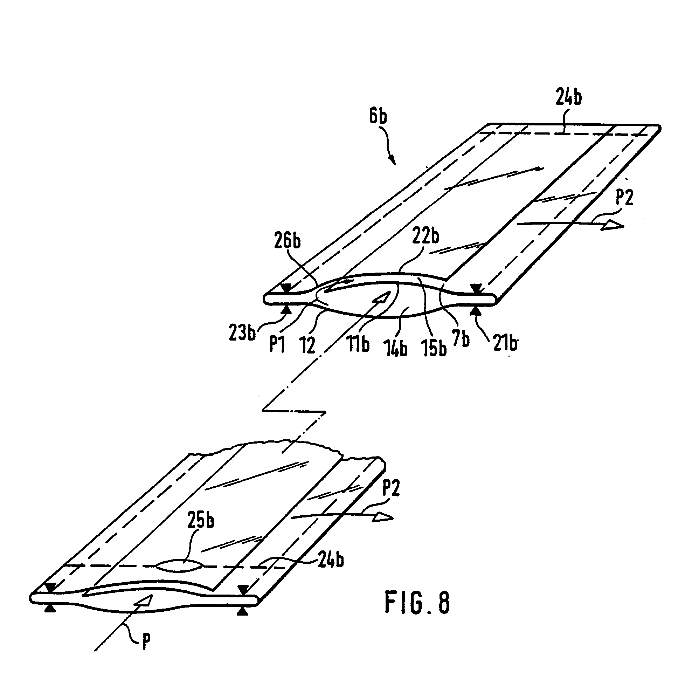

In Fig. 8 ist ein Folienschlauch 6b gezeigt, der aus einer zweifach gefalteten Folie hergestellt ist. Durch eine untere und eine obere Folienlage 12b und 11b, die miteinander an dem in der Zeichnung rechten Rand durch eine Schweißnaht 21b miteinander verbunden sind, wird die Hauptkammer 14b des Folienschlauches gebildet. Eine weitere Folienlage, die vom linken Rand der untern Folie 12b ausgeht, ist als Deckfolie 22b über die obere Folie 11b geschlagen und an den linken Rand des Folienschlauches mit einer Schweißnaht 23b mit der unteren Folie 12b verbunden. Die Folien des Folienschlauches 6b werden am Anfang und am Ende des Folienschlauches durch Querschweißnähte 24b miteinander verschweißt, wobei Sorge dafür getragen wird, daß die die Hauptkammer 14b begrenzenden Folien 11b und 12b an der vorderern Querschweißnaht 24b nicht miteinander verschweißt werden, so daß dort eine in der Fig. angedeutete Öffnung 25b verbleibt und von außen Luft in die Hauptkammer 14b eingeführt werden kann, wie durch den Pfeil P angedeutet.

Wenn Luft in die Hauptkammer 14b eingeblasen wird, so strömt diese durch einen Spalt 26b, der durch den Rand der oberen Folie 11b gebildet wird, in den Zwischenraum zwischen dieser Folie und der Deckfolie 22b, wie durch den Pfeil P1 angedeutet. Der Zwischenraum zwischen der oberen Folie 11b und der Deckfolie 22b dient somit als Nebenkammer. Die Luft strömt dann, wie durch den Pfeil P2 angedeutet, zwischen der oberen Folie 11b und dem freien Rand der Deckfolie 22b in den Folienbeutel aus. Als Austrittsöffnung 7b dient der Spalt zwischen oberer Folie 11b und Deckfolie 22b an deren Rand.

Durch diese Konstruktion wird zwischen der Hauptkammer 14b und der Austrittsöffnung 7b ein Strömungsweg mit hohem Strömungswiderstand gebildet. Wird der Aufblasvorgang abgebrochen, so wird durch den Innendruck im Folienbeutel die Deckfolie 22b gegen die obere Folie 11b der Hauptkammer 14b gedrückt, wodurch die Austrittsöffnung 7b verschlossen wird. Die Restluft in der Hauptkammer 14b wird durch das weitere Zusammenpressen des Folienschlauches nach außen herausgedrückt.

Der in Fig. 9 gezeigte Folienschlauch 6c ist ein modifiziertes Modell des Schlauches 6b, der hierzu durch eine Zwischenfolie 27c zwischen der oberen Folie 11c der Hauptkammer 14c und der Deckfolie 22c erweitert ist. Die in die Hauptkammer 14c zwischen der unteren und oberen Folie 12c bzw. 11c eingeblasene Luft muß bis zu dem Austrittsspalt 7c am rechten Rand der Deckfolie 22c einen durch den Pfeil P3 angegebenen mäanderförmigen Weg mit hohem Strömungswiderstand durchlaufen. Wird der Aufblasvorgang beendet, dann legt sich durch den Innendruck im Folienbeutel die Deckfolie 22c rasch an die Zwischenfolie 27c und diese an die obere Folie 11c der Hauptkammer an, so daß die Austrittsöffnung 7c praktisch unmittelbar nach Ende des Aufblasvorganges verschlossen wird. Die Zwischenräume zwischen den Folien 11c, 27c und 22c können als Nebenkammern 15c bezeichnet werden.

Das Material für die beschriebenen Folienbeutel und Folienschläuche ist aus den oben angegebenen Gründen bevorzugt Niederdruckpolyethylen. Die Herstellung der Folienbeutel und der Folienschläuche kann dadurch vereinfacht werden, daß gemäß Fig. 10 eine Folie des Folienbeutels 1 mit einem dünnen Streifen 28 aus Polyvinylchlorid verschweißt wird. Die Schweißnähte sind mit 29 gekennzeichnet. Auf den schmalen PVC-Streifen 28 wird ein Ölfilm 30 aufgebracht, wonach der Folienschlauch 6 auf diesen Ölfilm 30 aufgestrichen wird und damit an dem PVC-Streifen 28 haftet. Die in Fig. 8 angegebene Konstruktion ist für alle oben angegebenen Ausführungsformen möglich. Selbstverständlich ist es auch möglich, eine Verbindung zwischen dem PVC-Streifen 28 und dem Folienschlauch 6 durch eine Schweißung zwischen diesen beiden herzustellen, oder den Folienschlauch lediglich aus einem relativ dicken PVC-Streifen und einen dünnen Streifen aus Niederdruckpolyethylen herzustellen.

In Fig. 11 ist ein Detail eines Folienbeutels 1 im Bereich der Trennähte 5 dargestellt. Diese hier doppelt ausgeführten Trennähte, mit denen die obere und untere Folie des Folienbeutels verschweißt werden, sind üblicherweise V-förmig. Hierzu sind Matrizen und Patrizen vorhanden, um die Folien auf diese Art zu verschweißen. An den Stellen, an denen der Folienschlauch 6 von einer Kammer 2 zu der benachbarten Kammer 3 oder von einem Folienbeutel zu einem nächsten Folienbeutel durch die Trennaht 5 hindurchläuft, ist eine solche V-förmige Schweißnaht ungünstig. Günstiger ist es, in diesem Bereich die Schweißnaht, wie durch 5' angedeutet, flach und breit zu gestalten, um einerseits dieselbe Haltbarkeit wie in den übrigen Bereichen der Nähte 5 zu erzielen und andererseits den Folienschlauch 6 nicht mit zu verschweißen.

## Patentansprüche

1. Aufblasbarer Folienbeutel mit mehreren, gegeneinander abgedichteten Kammern, insbesondere für Verpackungszwecke, aus zwei aufeinandergelegten Folien oder einer gefalteten Folie, die an ihren Enden und an den die Kammern begrenzenden Bereichen (Nähten) miteinander verbunden, vorzugsweise verschweißt sind, wobei zum Aufblasen des Folienbeutels mit einem Medium der Folienbeutel einen direkt in dessen Innenraum geführten und an der Durchtrittsstelle mit seiner Wand gegenüber dem Innenraum des Folienbeutels abgedichteten Folienschlauch aufweist, der nach Ende des Aufblasvorganges durch den Innendruck im Folienbeutel nach Art eines selbstschließenden Ventils verschlossen wird, dadurch gekennzeichnet, daß der Folienschlauch (6) alle Kammern (2, 3, 4, 111) des Folienbeutels (1) in einem Zug durchläuft und an den Durchtrittsstellen in den Folienbeutel (1) und an den Durchtrittsstellen durch die die Kammern trennenden Nähte (5, 112, 113) mit seiner Wand unter Aufrechterhaltung der Abdichtung zwischen den Kammern mit den Folien des Folienbeutels (1) verbunden ist, selbst jedoch dort für das zum Aufblasen verwendete Medium durchgängig verbleibt, und daß die Wand des Folienschlauches (6) für das zum Aufblasen verwendete Medium durchgängig ist.

2. Folienbeutel nach Anspruch 1, dadurch gekennzeichnet, daß die Wand des Folienschlauches (6) Perforationen bzw. Austrittsöffnungen (7) aufweist.

3. Folienbeutel nach Anspruch 1 oder 2, dadurch gekennzeichnet, daß beide Enden des Folienschlauches (6) aus dem Folienbeutel (1) herausgeführt sind.

4. Folienbeutel nach einem der vorhergehenden Ansprüche, dadurch gekennzeichnet, daß der Folienschlauch (6') drei Folienlagen (105, 106, 107) aufweist, und daß die mittlere Folienlage (107) aus einem Material besteht, das eine Verbindung, insbesondere Verschweißung der beiden äußeren Folien verhindert.

5. Folienbeutel nach einem der vorhergehenden Ansprüche, dadurch gekennzeichnet, daß der Folienbeutel (1'') innerhalb einer Kammer (111a) Teilkammern (116) aufweist, die durch Nähte (112a) voneinander getrennt sind, wobei die Nähte (112a) an einigen Stellen (115a) für das zum Aufblasen verwendete Medium durchgängig sind.

6. Folienbeutel nach Anspruch 5, dadurch gekennzeichnet, daß die Nähte (112a) zwischen den Teilkammern (116) Durchbrüche (115a) aufweisen.

7. Folienbeutel nach einem der vorhergehenden Ansprüche, dadurch gekennzeichnet, daß der Folienbeutel (1) sowie der Folienschlauch (4) aus Kunststoffolien (2, 3) bzw. Kunststoffolienstreifen (5, 6, 7) hergestellt sind.

8. Folienbeutel nach einem der vorhergehenden Ansprüche, dadurch gekennzeichnet, daß mehrere Folienbeutel aneinandergereiht, jedoch voneinander zu trennen sind, und daß der Folienschlauch (6') alle aneinandergereihten Folienbeutel (1') durchläuft.

9. Aufblasbarer Folienbeutel nach Anspruch 1, dadurch gekennzeichnet, daß der Folienschlauch (6) eine in Längsrichtung verlaufende Kammer (Hauptkammer 14) zum Einführen des zum Aufblasen verwendeten Mediums aufweist, die mit den Austrittsöffnungen (7) kommuniziert, und daß zumindest im Bereich der Austrittsöffnungen (7) im Außenbereich des Folienschlauches (6) zumindest eine nicht der Hauptkammer (14) zugehörige Folie (15, 22, 27c) vorgesehen ist, die einen Teil des selbtschließenden Ventils bildet.

10. Folienbeutel nach Anspruch 9, dadurch gekennzeichnet, daß zwischen Hauptkammer (14) und Austrittsöffnungen (7) zumindest eine Nebenkammer (15) vorgesehen ist, die die Austrittsöffnungen (7) aufnimmt und mit der Hauptkammer (14) und den Austrittsöffnungen (7) unter Bildung eines Strömungsweges mit hohem Strömungswiderstand kommuniziert.

11. Folienbeutel nach Anspruch 10, dadurch gekennzeichnet, daß Hauptkammer (14, 14a) und die Nebenkammer (15) bzw. Nebenkammern (15a) in Längsrichtung des Folienschlauches (6, 6a) parallel angeordnet sind und über Verbindungsöffnungen (16, 16a) kommunizieren, und daß die Austrittsöffnungen (17, 17a) und Verbindungsöffnungen (16, 16a) längs des Folienschlauches (6, 6a) an unterschiedlichen Positionen angeordnet sind.

12. Folienbeutel nach Anspruch 9 oder 10, dadurch gekennzeichnet, daß der Folienschlauch (6a) lediglich im Bereich der Austrittsöffnungen (7a) Nebenkammern (15a) aufweist.

13. Folienschlauch nach einem der Ansprüche 9 bis 11, dadurch gekennzeichnet, daß zur Bildung der Nebenkammern (15b, 15c) die Hauptkammer (14b, 14c) des Folienschlauches (6b, 6c) durch zumindest eine weitere Folie (22c, 27c) begrenzt ist, die so angeordnet ist, daß das zum Aufblasen verwendete Medium zwischen der Hauptkammer (14b, 14c) und den Austrittsöffnungen (7b, 7c) einem schleifen- oder mäanderförmigen Weg (P1, P3) folgt.

14. Folienbeutel nach einem der vorhergehenden Ansprüche, dadurch gekennzeichnet, daß zur unterschiedlichen Formgebung des Folienbeutels (1) dessen obere und untere Folie mit Verbindungsnähten (8) miteinander verbunden sind.

15. Folienbeutel nach einem der vorstehenden Ansprüche, dadurch gekennzeichnet, daß die Folienlagen des Folienschlauches (6) unterschiedlich dick sind.

**Revendications**

1. Sac en feuille gonflable présentant plusieurs chambres isolées les unes des autres, destiné à l'emballage, constitué de deux feuilles posées l'une sur l'autre ou d'une feuille pliée, ces feuilles étant reliées les unes aux autres à leurs extrémité et dans les zones limitant les chambres (coutures), de préférence soudées, et pour gonfler le sac en feuille à l'aide d'un agent, ledit sac en feuille présente un tuyau en feuille introduit directement à l'intérieur du sac et isolé à sa sortie de sa paroi vis-à-vis de l'intérieur du sac en feuille, le tuyau étant fermé après gonflage par pression intérieure dans le sac à la manière d'une soupape à fermeture automatique, caractérisé en ce que le tuyau en feuille (6) traverse d'un trait toutes les chambres (2, 3, 4, 111) du sac en feuille (1), et aux passages dans le sac en feuille (1) et aux passages à travers les coutures (5, 112, 113) séparant les chambres, il est relié avec sa paroi avec les feuilles du sac en feuille (1) en maintenant l'isolation entre les chambres, mais reste lui-même toutefois traversable pour l'agent utilisé pour le gonflage, et en ce que la paroi du tuyau en feuille (6) est traversable pour l'agent utilisé pour le gonflage.

2. Sac en feuille selon la revendication 1, caractérisé en ce que la paroi du tuyau en feuille (6) présente des perforations ou des ouvertures de sortie (7).

3. Sac en feuille selon la revendication 1 ou 2, caractérisé en ce que les deux extrémités du tuyau en feuille (6) sont conduites en dehors du sac en feuille (1).

4. Sac en feuille selon l'une des revendications précédentes, caractérisé en ce que le sac en feuille (6') présente trois couches de feuilles (105, 106, 107) et en ce que la couche de feuille du milieu (107) est en un matériau qui empêche une liaison, en particulier la soudure des feuilles extérieures.

5. Sac en feuille selon l'une des revendications précédentes, caractérisé en ce que le sac en feuille (1'') présente à l'intérieur d'une chambre (111a) des chambres sectionnées (116) séparées les unes des autres par des coutures (112a), les coutures (112a) étant à quelques endroits (115a) franchissables pour l'agent utilisé pour le gonflage.

6. Sac en feuille selon la revendication 5, caractérisé en ce que les coutures (112a) entre les chambres sectionnées (116) présentent des percements (115a).

7. Sac en feuille selon l'une des revendications précédentes, caractérisé en ce que le sac en feuille (1) ainsi que le tuyau en feuille (4) sont fabriqués en feuilles de matière plastique (2, 3) et en bandes de feuille de matière plastique (5, 6, 7), respectivement.

8. Sac en feuille selon l'une des revendications précédentes, caractérisé en ce que plusieurs sacs en feuille sont alignés les uns aux autres, toutefois séparables les uns des autres et que le tuyau en feuille (6') traverse tous les sacs en feuille (1') alignés les uns aux autres.

9. Sac en feuille gonflable selon la revendication 1, caractérisé en ce que le tuyau en feuille (6) présente une chambre s'étendant en direction longitudinale (chambre principale 14) pour introduire l'agent de gonflage, chambre qui communique avec les ouvertures de sortie (7) et en ce qu'il est prévu au moins dans la zone des ouvertures de sortie (7) dans la partie extérieure du tuyau en feuille (6) au moins une feuille (15, 22, 27c) qui n'appartient pas à la chambre principale (14) et qui forme une partie de la soupape à fermeture automatique.

10. Sac en feuille selon la revendication 9, caractérisé en ce qu'il est prévu entre la chambre principale (14) et les ouvertures de sortie (7) au moins une chambre secondaire (15) qui reçoit les ouvertures de sortie et communique avec la chambre principale (14) et les ouvertures de sortie en formant une voie de flux à haute résistance de flux.

11. Sac en feuille selon la revendication 10, caractérisé en ce que la chambre principale (14, 14a) et la chambre secondaire (15) ou les chambres secondaires (15a) sont disposées parallèlement dans la direction longitudinale du tuyau en feuille (6, 6a) et communiquent par les ouvertures de liaison (16, 16a), et en ce que les ouvertures de sortie (17, 17a) et ouvertures de liaison (16, 16a) sont disposées le long du tube en feuille (6, 6a) à différentes positions.

12. Sac en feuille selon la revendication 9 ou 10, caractérisé en ce que le tuyau en feuille (6a) présente des chambres secondaires (15a) uniquement dans la zone des ouvertures de sortie (7a).

13. Sac en feuille selon l'une des revendications 9 à 11, caractérisé en ce que pour les former les chambres secondaires (15b, 15c), la chambre principale (14b, 15c) est limitée par au moins une autre feuille (22c, 27c) qui est disposée de telle sorte que l'agent utilisé pour le gonflage suit entre la chambre principale (14b, 14c) et les ouvertures de sortie (7b, 7c) un chemin (P1, P3) en forme de bouclesou de méandres.

14. Sac en feuille selon l'une des revendications précédentes, caractérisé en ce que pour former différemment le sac en feuille (1), sa feuille supérieure et sa feuille inférieure sont reliées l'une à l'autre par des coutures de liaison (8).

15. Sac en feuille selon l'une des revendications précédentes, caractérisé en ce que les couches de feuilles du tuyau en feuille (6) ont des épaisseurs différentes.

**Claims**

1. An inflatable film bag having a plurality of mutually sealed chambers, in particular for packaging purposes, consisting of two superposed films or a folded film which are interconnected, preferably welded together, at their ends and at the areas (seams) limiting the chambers, whereby the film bag, to permit its inflation by a medium, has a film tube guided directly into its interior space and sealed from the interior space of the film bag with its wall at the point of passage said film tube being closed in the manner of a self-closing valve after the end of the internal pressure in the film bag, characterized in that the film tube (6) passes through all chambers (2, 3, 4, 111) of the film bag (1) without interruption and is connected at its wall with the films of the film bag (1) at the points of passage into the film bag (1) and at the points of passage through the seams (5, 112, 113) separating the chambers so as to maintain the seal between the chambers, while itself remaining permeable there for the medium used for inflation, and the wall of the film tube (6) is permeable for the medium used for inflation.

2. The film bag of claim 1, characterized in that the wall of the film tube (6) has perforations or outlet holes (7).

3. The film bag of claim 1 or 2, characterized in that both ends of the film tube (6) are guided out of the film bag (1).

4. The film bag of any of the preceding claims, characterized in that the film tube (6') has three layers of film (105, 106, 107), and the middle film layer (107) is made of a material that prevents bonding, in particular welding, of the two outer films.

5. The film bag of any of the preceding claims, characterized in that the film bag (1'') has within a chamber (111a) partial chambers (116) separated from each other by seams (112a), the seams (112a) being permeable at some points (115a) for the medium used for inflation.

6. The film bag of claim 5, characterized in that the seams (112a) have openings (115a) between the partial chambers (116).

7. The film bag of any of the preceding claims, characterized in that the film bag (1) and the film tube (4) are made from plastic films (2, 3) or plastic film strips (5, 6, 7).

8. The film bag of any of the preceding claims, characterized in that a plurality of film bags are linked together but separate from each other and the film tube (6') passes through all linked film bags (1').

9. The inflatable film bag of claim 1, characterized in that the film tube (6) has a longitudinally extending chamber (main chamber 14) for introducing the medium used for inflation, said main chamber communicating with the outlet holes (7), and at least one film (15, 22, 27c) not belonging to the main chamber (14) is provided at least in the area of the outlet holes (7) in the outer area of the film tube (6) to form part of the self-closing valve.

10. The film bag of claim 9, characterized in that at least one secondary chamber (15) is provided between the main chamber (14) and the outlet holes (7), said secondary chamber taking up the outlet holes (7) and communicating with the main chamber (14) and the outlet holes (7) so as to form a path of flow with high flow resistance.

11. The film bag of claim 10, characterized in that the main chamber (14, 14a) and the secondary chamber (15) or chambers (15a) are parallel in the longitudinal direction of the film tube (6, 6a) and communicate via commencing openings (16, 16a), and the outlet holes (17, 17a) and connecting openings (16, 16a) are disposed at different positions along the film tube (6, 6a).

12. The film bag of claim 9 or 10, characterized in that the film tube (6a) has secondary chambers (15a) only in the area of the outlet holes (7a).

13. The film tube of any of claims 9 to 11, characterized in that to form the secondary chambers (15b, 15c) the main chamber (14b, 14c) of the film tube (6b, 6c) is limited by at least one further film (22c, 27c) disposed in such a way that the medium used for inflation follows a looped or meandering path (P1, P3) between the main chamber (14b, 14c) and the outlet holes (7b, 7c).

14. The film bag of any of the preceding claims, characterized in that to allow for different shaping of the film bag (1) its upper and lower films are interconnected by connecting seams (8).

15. The film bag of any of the preceding claims, characterized in that the layers of film of the film tube (6) are of different thicknesses.

FIG.1

FIG.11

FIG. 2

FIG.3

106   103   1'
7
108        108
120
107
105
6'
102

FIG.4

1"
7
103a
6"
102a

FIG.5

14
16
13
6
7
11
7
7
12

FIG.6

FIG.7

FIG.9

FIG.10

FIG.8